(19) Europäisches Patentamt
European Patent Office
Office européen des brevets

(11) EP 3 298 644 B1

(12) **FASCICULE DE BREVET EUROPEEN**

(45) Date de publication et mention de la délivrance du brevet:
**30.10.2019 Bulletin 2019/44**

(21) Numéro de dépôt: **16723131.5**

(22) Date de dépôt: **18.05.2016**

(51) Int Cl.:
*H01M 4/36* (2006.01)   *H01M 4/505* (2010.01)
*H01M 4/525* (2010.01)   *H01M 4/58* (2010.01)
*H01M 10/0525* (2010.01)

(86) Numéro de dépôt international:
**PCT/EP2016/061113**

(87) Numéro de publication internationale:
**WO 2016/184896 (24.11.2016 Gazette 2016/47)**

(54) **ÉLECTRODE POSITIVE POUR GÉNÉRATEUR ÉLECTROCHIMIQUE AU LITHIUM**

POSITIVELEKTRODE FÜR EINEN ELEKTROCHEMISCHEN LITHIUMGENERATOR

POSITIVE ELECTRODE FOR A LITHIUM ELECTROCHEMICAL GENERATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.05.2015 FR 1554478**

(43) Date de publication de la demande:
**28.03.2018 Bulletin 2018/13**

(73) Titulaire: **SAFT**
**93170 Bagnolet (FR)**

(72) Inventeurs:
• **DUMONT, Erwan**
**33440 Ambares Et Lagrave (FR)**
• **CASTAING, Frédéric**
**33170 Gradigan (FR)**
• **TESSIER, Cécile**
**33520 Bruges (FR)**

(74) Mandataire: **Hirsch & Associés**
**137, rue de l'Université**
**75007 Paris (FR)**

(56) Documents cités:
**WO-A1-2015/040005      JP-A- 2011 113 783**
**US-A1- 2011 223 482**

EP 3 298 644 B1

**Description**

DOMAINE TECHNIQUE

Le domaine technique de l'invention est celui des matières actives destinées à être utilisées dans l'électrode positive (ou cathode) d'un générateur électrochimique rechargeable (ou accumulateur) au lithium.

ART ANTERIEUR

Dans un générateur électrochimique, une matière active est une matière qui participe aux réactions électrochimiques pour produire de l'énergie électrique lorsque le générateur électrochimique se décharge. Les oxydes lithiés de métaux de transition sont connus comme matière active cathodique utilisable dans les générateurs électrochimiques au lithium. Dans l'électrode positive, on utilise le plus souvent comme matière active des oxydes lithiés de métaux de transition de formule générale $LiMO_2$, où M représente au moins un métal de transition tel que Mn, Ni, Co ou un mélange de ceux-ci. Ces matières actives permettent d'obtenir des performances élevées, notamment en termes de capacité réversible en cyclage et de durée de vie. Par exemple, $LiCoO_2$ et $LiNiO_2$ présentent respectivement une capacité d'environ 180 et 220 mAh/g. $LiCoO_2$ présente cependant deux inconvénients majeurs qui sont sa toxicité et son coût élevé.

Il est également connu d'utiliser un oxyde lithié de manganèse appartenant à la famille des spinelles et ayant pour formule $LiMn_2O_4$. Ce composé bénéficie d'un faible coût et d'une absence de toxicité, mais présente une capacité réduite (110 mAh/g) et une durée de vie réduite qui provient de la dissolution significative de l'oxyde dans l'électrolyte du générateur électrochimique.

D'autres matières actives d'un coût moindre que $LiCoO_2$ et présentant une bonne stabilité thermique et une absence de toxicité ont été étudiées, parmi lesquelles les phosphates lithiés d'au moins un métal de transition, tel que $LiFePO_4$ et $LiMnPO_4$. L'utilisation de $LiFePO_4$ et de $LiMnPO_4$ se heurte cependant à leur faible conductivité électronique. Il est généralement nécessaire d'ajouter dans l'électrode une forte proportion d'un matériau conducteur électronique afin d'obtenir un générateur électrochimique présentant de bonnes performances en décharge à un courant élevé. De plus, $LiFePO_4$ présente une faible énergie spécifique, en raison du faible potentiel de fonctionnement électrochimique. $LiMnPO_4$ présente un potentiel de fonctionnement plus élevé, mais en revanche présente une mauvaise durée de vie lorsqu'il est utilisé comme matériau d'électrode positive face à une électrode négative de graphite dans un générateur électrochimique fonctionnant en cyclage. De plus, il est difficile de diminuer la porosité d'une électrode réalisée avec l'un ou l'autre de ces matériaux, ce qui conduit à une faible capacité massique du générateur contenant ces matériaux.

Il a été recherché un générateur électrochimique présentant une capacité massique et une durée de vie en cyclage élevées.

Le document US 2013/0280610 décrit une composition de matière active pour une électrode positive d'un générateur électrochimique au lithium, ladite composition comprenant :

- un oxyde lithié de nickel, de cobalt et de manganèse
- un phosphate lithié de fer et de manganèse.

Ce document enseigne qu'utiliser une poudre d'oxyde lithié de nickel, de cobalt et de manganèse dont la taille des particules est différente de celle de la poudre de phosphate lithié de fer et de manganèse entraine une baisse de la conductivité électrique de l'électrode. Pour pallier ce problème, il est décrit l'utilisation comme matériau de départ d'une poudre de phosphate lithié de fer et de manganèse dont la taille des particules dites "primaires", est de 5 à 200 nm. Ces particules sont agglomérées en particules dites "secondaires". Pour ce faire, une technique de séchage par vaporisation centrifuge est employée. Les particules primaires sont mélangées à de l'eau et le mélange est placé sous agitation. Les particules primaires s'agglomèrent en particules secondaires sous l'effet du séchage par vaporisation centrifuge. La taille des particules secondaires obtenues peut alors se situer dans la plage allant de 5 à 20 μm. Ce document enseigne qu'en formant des particules secondaires de phosphate lithié de fer et de manganèse dont la taille est voisine de celle des particules d'oxyde lithié de nickel, de cobalt et de manganèse, on augmente la conductivité électronique de la matière active et la capacité de l'électrode. Le procédé de fabrication décrit dans ce document est complexe car il requiert l'utilisation de la technique de séchage par vaporisation centrifuge pour créer des agglomérats.

Le document WO 2006/071972 décrit une composition de matière active pour une électrode positive d'un générateur électrochimique au lithium, ladite composition comprenant :

- un oxyde lithié de cobalt ou un oxyde lithié de nickel,
- un oxyde lithié de manganèse de type $LiMn_2O_4$ ou un phosphate lithié qui est soit $LiFePO_4$, soit $LiMnPO_4$.

Ce document ne donne aucune information sur la taille des particules de phosphate lithié et d'oxyde lithié utilisées.

Le document US 2014/0138591 décrit une composition de matière active pour une électrode positive d'un générateur électrochimique au lithium, ladite composition comprenant:

- un phosphate lithié de fer et de manganèse,
- un oxyde lithié de nickel, manganèse et de cobalt.

Il est dit que l'utilisation de cette composition permettait de fabriquer un générateur présentant une capacité massique élevée, ainsi qu'une sécurité d'utilisation accrue en cas d'augmentation de la température. Le phosphate lithié de fer et de manganèse se présente de préférence sous la forme d'une poudre dont la taille des particules est inférieure à 100 nm. Selon ce document, utiliser cette plage de tailles de particules favoriserait le transport du lithium et augmenterait la conductivité électronique du phosphate lithié de fer et de manganèse. Néanmoins, la Demanderesse a constaté que l'utilisation d'une telle plage de tailles de particules rendait difficile la réalisation d'une électrode. Cette difficulté se traduit:

- soit par une porosité trop élevée,
- soit par une mauvaise adhésion de la matière active au collecteur de courant, support de l'électrode, lors de l'étape de calandrage de l'électrode.

Le calandrage est l'une des étapes de fabrication de l'électrode au cours de laquelle le collecteur de courant de l'électrode, revêtu sur au moins l'une de ses faces de matière active, passe entre deux cylindres en rotation. Les deux cylindres exercent une pression sur l'électrode. Le réglage de l'écartement entre les deux cylindres permet d'ajuster l'épaisseur de l'électrode et sa porosité aux valeurs souhaitées.

Le document US 2014/0045069 décrit une composition de matière active pour une électrode positive d'un générateur électrochimique au lithium, ladite composition comprenant:

- un composé de type $LiNi_{1-b}Z_bO_2$ où Z représente un ou plusieurs éléments choisis parmi Co, Mn, Al, Mg et V ; et b va de 0 à 0,4.
- un composé de type $LiMn_{1-a}X_aPO_4$ où X représente Mg et/ou Fe et a va de 0 à 0,3.

Il est dit que cette composition permettait de réduire l'élution du manganèse dans l'électrolyte et d'augmenter la durée de vie du générateur en cyclage. Pour fabriquer cette composition de matière active, on part pour chacun de ces deux composés, de poudres dont la taille des particules est de préférence comprise entre 1 et 40 nm. Selon ce document, l'utilisation d'une telle plage de tailles permettrait de diminuer la dissolution de la matière active dans l'électrolyte, de faciliter l'insertion des ions lithiums dans la matière active et de réduire la résistance électrique de l'électrode. Néanmoins, la Demanderesse a constaté que comme pour le document US 2014/0138591 commenté ci-avant, l'utilisation d'une telle plage de tailles de particules rendait difficile la réalisation d'une électrode.

Le document WO 2014/102071 décrit une électrode positive d'un générateur électrochimique au lithium comprenant un collecteur de courant sur lequel sont déposées au moins deux couches de matière électrochimiquement active. La première couche au contact du collecteur de courant peut être un mélange d'un phosphate lithié de fer et de manganèse avec un oxyde lithié de métal de transition. La seconde couche contient un phosphate lithié de fer. Ce document ne donne aucune information sur la taille des particules de phosphate lithié et d'oxyde lithié utilisées.

Le document JP 2011-113783 décrit une composition de matière active pour une électrode positive d'un générateur électrochimique au lithium, ladite composition comprenant par exemple:

- un premier composé qui est un phosphate lithié de fer et de manganèse, sous forme de particules;
- un second composé qui est un oxyde lithié de nickel, cobalt et de manganèse, sous forme de particules ;

dans laquelle le ratio entre le diamètre des particules d'oxyde lithié de nickel, cobalt et de manganèse sur le diamètre des particules de phosphate lithié de fer et de manganèse est supérieur ou égal à 1,5. Par conséquent, dans ce document, le ratio entre le diamètre des particules de phosphate lithié de fer et de manganèse et le diamètre des particules d'oxyde lithié de nickel, cobalt et de manganèse est inférieur ou égal à 0,67.

On recherche une électrode positive pour générateur électrochimique de type lithium-ion qui présente à la fois une faible porosité, c'est-à-dire une porosité inférieure à environ 50%, de préférence comprise entre 30 et 40%, et dont la composition de matière active présente une bonne adhésion au collecteur de courant. De préférence, on cherche à ce que cette électrode présente une capacité massique élevée. De préférence encore, on cherche à ce qu'elle présente une durée de vie élevée lorsqu'elle est utilisée dans des conditions de cyclage.

## RESUME DE L'INVENTION

L'invention a pour objet une composition de matière active pour électrode positive d'un générateur électrochimique de type lithium-ion, comprenant:

- un oxyde lithié de métaux de transition de formule $Li_{1+x}MO_2$ dans laquelle : $0 \leq x \leq 0,15$, M désigne $Ni_aMn_bCo_cM'_d$ où a>0 ; b>0 ; c>0 ; d≥0 et a+b+c+d=1; M' étant choisi dans le groupe consistant en B, Mg, Al, Si, Ca, Ti, V, Cr, Fe, Cu, Zn, Y, Zr, Nb, Mo ou un mélange de ceux-ci;
- un phosphate lithié de métaux de transition de formule $LiMn_{1-y}M''_yPO_4$ où M'' représente au moins un élément choisi dans le groupe constitué par Fe, Ni, Co, Mg et Zn; et 0<y<0,5 ; l'oxyde lithié et le phosphate lithié étant sous la forme de particules ;

la distribution de la taille des particules de l'oxyde lithié étant caractérisée par un premier diamètre médian en volume des particules $Dv_{50}^1 \geq 500$ nm;
la distribution de la taille des particules du phosphate lithié étant caractérisée par un second diamètre médian en volume des particules $Dv_{50}^2 \geq 500$ nm;
et $Dv_{50}^2 / Dv_{50}^1 \geq 1,5$.

Selon un mode de réalisation, le phosphate lithié de métaux de transition est revêtu d'une couche de carbone.

Selon un mode de réalisation, la composition comprend de 30 à 80% en masse d'oxyde lithié, et de 70 à 20% en masse de phosphate lithié.

Selon un mode de réalisation, la composition comprend de 20 à 50% en masse d'oxyde lithié, et de 80 à 50% en masse de phosphate lithié.

Selon un mode de réalisation, $0,60 \geq a \geq 0,45$ ; $0,35 \geq b \geq 0,25$ ; $0,25 \geq c \geq 0,14$.

Selon un mode de réalisation, $Dv_{50}^2 \geq 1\ \mu m$ et $Dv_{50}^1 \geq 1\ \mu m$.

Selon un mode de réalisation, $Dv_{50}^2 \geq 15\ \mu m$ et $Dv_{50}^1 \geq 5\ \mu m$.

Selon un mode de réalisation, $Dv_{50}^2 / Dv_{50}^1 \geq 2$, de préférence $Dv_{50}^2 / Dv_{50}^1 \geq 3$.

Selon un mode de réalisation, M'' est Fe.

Selon un mode de réalisation, $a \leq 0,50$.

L'invention a également pour objet une électrode comprenant la composition de matière active décrite ci-avant.

Selon un mode de réalisation, l'électrode comprend uniquement l'oxyde lithié de métaux de transition et le phosphate lithié de métaux de transition comme matières électrochimiquement actives.

Enfin, l'invention a également pour objet un générateur électrochimique au lithium comprenant :

- au moins une électrode positive qui est une électrode telle que décrite ci-avant;
- au moins une électrode négative comprenant un matériau capable d'insérer et de désinsérer du lithium dans sa structure.

## BREVE DESCRIPTION DES FIGURES

La figure 1 représente la variation de la porosité d'une composition de matière active comprenant de l'oxyde lithié dans des proportions croissantes.
La figure 2 représente la variation de la capacité massique d'une composition de matière active comprenant de l'oxyde lithié dans des proportions croissantes.
La figure 3 représente la variation de la résistance interne d'une composition de matière active comprenant de l'oxyde lithié dans des proportions croissantes.

Bien entendu, la présente invention n'est pas limitée aux exemples et aux modes de réalisation décrits et représentés, mais elle est susceptible de nombreuses variantes accessibles à l'homme de l'art.

## EXPOSE DE MODES DE REALISATION

L'oxyde lithié de métaux de transition utilisé dans l'invention a pour formule $Li_{1+x}MO_2$ dans laquelle :

$$0 \leq x \leq 0,15,$$

M désigne $Ni_aMn_bCo_cM'_d$ où a>0 ; b>0 ; c>0 ; d≥0 et a+b+c+d=1; et M' est choisi dans le groupe consistant en B, Mg, Al, Si, Ca, Ti, V, Cr, Fe, Cu, Zn, Y, Zr, Nb, Mo ou un mélange de ceux-ci.

Selon un mode de réalisation, a≤0,60.

Selon un mode de réalisation, a<0,60.

Selon un mode de réalisation, a≤0,50.

Selon un mode de réalisation, 0,55≥a≥0,45.

Selon un mode de réalisation, 0,40≥b≥0,15 ; de préférence 0,35≥b≥0,20.

Selon un mode de réalisation, 0,30≥c≥0,10 ; de préférence 0,25≥c≥0,15.

Selon un mode de réalisation, x ≤ 0,10 ; de préférence 0,01 ≤ x ≤ 0,06.

Des exemples d'oxyde lithié sont :

$LiNi_{1/3}Mn_{1/3}Co_{1/3}O_2$ ;
$Li_{1+x}Ni_{0,5}Mn_{0,3}Co_{0,2}O_2$ avec 0,01 ≤ x ≤ 0,10, de préférence 0,01 ≤ x ≤ 0,06;
$Li_{1+x}Ni_{0,6}Mn_{0,2}Co_{0,2}O_2$ avec 0,01 ≤ x ≤ 0,10, de préférence 0,01 ≤ x ≤ 0,06.

Dans un mode de réalisation, Ni, Mn et Co sont partiellement substitués par de l'aluminium, tel que le composé de formule $LiNi_{0,3}Mn_{0,5}Co_{0,15}Al_{0,05}O_2$.

Le phosphate lithié de métaux de transition utilisé dans l'invention a pour formule $LiMn_{1-y}M''_yPO_4$ où M'' représente au moins un élément choisi dans le groupe constitué par Fe, Ni, Co, Mg et Zn; et 0<y<0,5. De préférence M'' est Fe.

Dans un mode de réalisation y≥0,10. De préférence, y≥0,20. De préférence encore, y≥0,30.

Des exemples de phosphate lithié sont $LiFe_{0,2}Mn_{0,8}PO_4$ ; $LiFe_{0,33}Mn_{0,67}PO_4$.

Selon l'invention, l'oxyde lithié et le phosphate lithié utilisés sont chacun sous la forme d'une poudre. La distribution de la taille des particules d'oxyde lithié est caractérisée par un premier diamètre médian en volume $Dv_{50}^1$ supérieur ou égal à 500 nm. La distribution de la taille des particules de phosphate lithié est caractérisée par un second diamètre médian en volume $Dv_{50}^2$ supérieur ou égal à 500 nm. On désigne par le terme de diamètre équivalent d'une particule le diamètre d'une sphère possédant le même volume que cette particule. Le terme médian signifie que 50% du volume des particules d'oxyde lithié (ou de phosphate lithié) est constitué de particules présentant un diamètre équivalent inférieur à 500 nm et 50% du volume des particules des particules d'oxyde lithié (ou de phosphate lithié) est constitué de particules présentant un diamètre équivalent supérieur à 500 nm.

Dans un mode de réalisation préféré, $Dv_{50}^1$ et $Dv_{50}^2$ sont supérieurs ou égaux à 1 μm. Dans un mode de réalisation préféré, $Dv_{50}^1$ est supérieur ou égal à 5 μm et/ou $Dv_{50}^2$ est supérieur ou égal à 15 μm.

Dans un mode de réalisation préféré, 90% du volume des particules d'oxyde lithié (ou de phosphate lithié) est constitué de particules présentant un diamètre équivalent supérieur à 500 nm et 10% du volume des particules d'oxyde lithié (ou de phosphate lithié) est constitué de particules présentant un diamètre équivalent inférieur à 500 nm.

L'invention exclut donc l'utilisation de poudre d'oxyde lithié ou de phosphate lithié nanométrique, c'est-à-dire dont le diamètre équivalent est inférieur à environ 100 nm.

La mesure de la taille des particules peut être effectuée par la technique de granulométrie laser.

Selon l'invention, le ratio $Dv_{50}^2 / Dv_{50}^1$ est supérieur ou égal à 1,5. Dans un mode de réalisation préféré, $Dv_{50}^2 / Dv_{50}^1$ est supérieur ou égal à 2, voire supérieur ou égal à 3. Ceci a pour effet de réduire la porosité de la matière active, donc d'augmenter sa compacité. L'augmentation de la compacité permet une augmentation de la densité énergétique de l'électrode.

Comme expliqué ci-avant, il est connu qu'un phosphate lithié est mauvais conducteur électronique alors qu'un oxyde lithié est bon conducteur électronique et que par conséquent il est préférable d'utiliser des particules d'oxyde lithié d'un diamètre médian en volume supérieur à celui des particules de phosphate lithié. Or, il a été découvert qu'il était possible de fabriquer une électrode présentant une capacité massique satisfaisante, même en utilisant des particules de phosphate lithié ayant un diamètre médian en volume supérieur à celui des particules d'oxyde lithié.

Les poudres d'oxyde lithié et de phosphate lithié peuvent être obtenues par broyage de particules de taille supérieure à la taille souhaitée, suivi d'un tamisage permettant de ne retenir que les particules de taille désirée. Les poudres d'oxyde lithié et de phosphate lithié peuvent également être obtenues à partir de particules de taille inférieure à celle souhaitée. On agglomère les particules pour former un amas, appelé particule "secondaire" par opposition aux particules non agglomérées dites particules "primaires". Les particules secondaires peuvent par exemple être obtenues en utilisant la technique de séchage par vaporisation centrifuge. Cette technique est décrite en outre dans le document US 2013/0280610 commenté ci-avant. L'homme du métier possède les connaissances nécessaires lui permettant de déterminer les conditions opératoires pour broyer et tamiser les particules ou les agglomérer pour obtenir des particules secondaires.

Selon un mode de réalisation, on utilise une poudre de phosphate lithié constituée essentiellement de particules primaires dont le diamètre médian en volume $Dv_{50}^2$ est supérieur ou égal à 500 nm, et non de particules secondaires.

L'oxyde lithié de métaux de transition et le phosphate lithié sont mélangés pour former une composition de matière active. L'oxyde lithié et le phosphate lithié peuvent être mélangés en utilisant des techniques conventionnelles de mélange, par exemple un mélangeur planétaire, pour obtenir la composition de matière active selon l'invention. Selon un mode de réalisation, la composition de matière active ne comprend pas de matière active autre que l'oxyde lithié et le phosphate lithié. Dans un mode de réalisation, le phosphate lithié est revêtu d'une couche de carbone avant son mélange avec l'oxyde lithié.

Dans le mélange obtenu, l'oxyde lithié peut représenter de 20 à 80% en masse de la composition et le phosphate lithié peut représenter de 80 à 20% en masse de la composition.

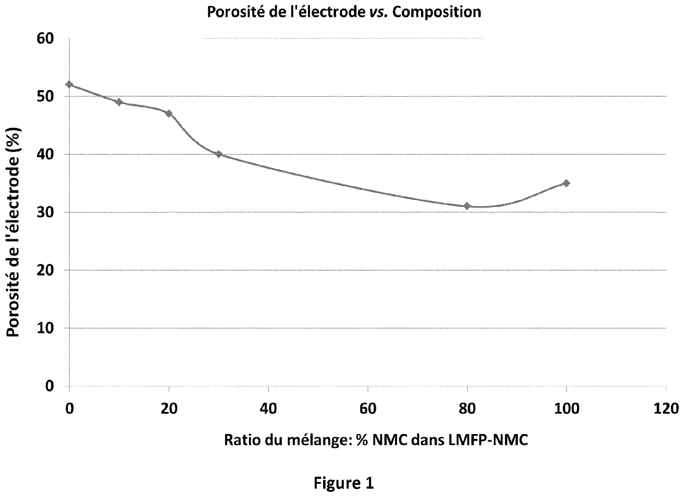

Dans un mode de réalisation préféré, l'oxyde lithié représente de 30 à 80% en masse de la composition et le phosphate lithié représente de 70 à 20% en masse de la composition. Il a en effet été constaté que c'est dans la plage de 30 à 80% d'oxyde lithié que la porosité de l'électrode était optimale. La figure 1 représente la variation de la porosité d'une composition de matière active comprenant de l'oxyde lithié dans des proportions croissantes. Elle montre différentes parties :

- lorsque la composition de matière active est constituée pratiquement uniquement de phosphate lithié, c'est-à-dire qu'elle contient moins de 5% en masse d'oxyde lithié, sa porosité est élevée. Elle est supérieure à 50%. Une électrode dont la matière électrochimiquement active est essentiellement constituée de phosphate lithié peut difficilement être compactée. Cette difficulté à diminuer la porosité de l'électrode entraine des problèmes de conductivité électronique de l'électrode et donc des problèmes de chargeabilité et déchargeabilité.
- lorsque la composition de matière active comprend de 30 à 80% d'oxyde lithié, la porosité est comprise entre 30 et 40%, ce qui est recherché. Le choix de la plage de pourcentage de 30 à 80% permet donc de réduire la porosité de l'électrode et de résoudre les problèmes de mauvaise conductivité électronique de l'électrode.
- lorsque la composition de matière active comprend plus de 80% d'oxyde lithié, la porosité du mélange augmente, ce qui n'est pas souhaitable.

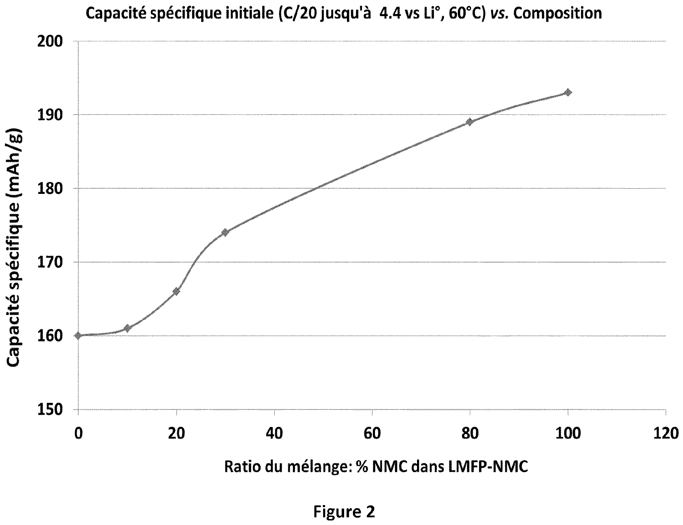

On a également constaté que la capacité massique de la composition de matière active atteignait sa valeur maximale lorsque l'oxyde lithié représente de 20 à 30 % en masse de la composition. La figure 2 représente la variation de la capacité massique d'une composition de matière active comprenant de l'oxyde lithié dans des proportions croissantes. De manière surprenante, elle montre que la capacité massique de l'électrode ne suit pas une loi linéaire et trouve un optimum pour un mélange comprenant de 20 à 30 % en masse d'oxyde lithié.

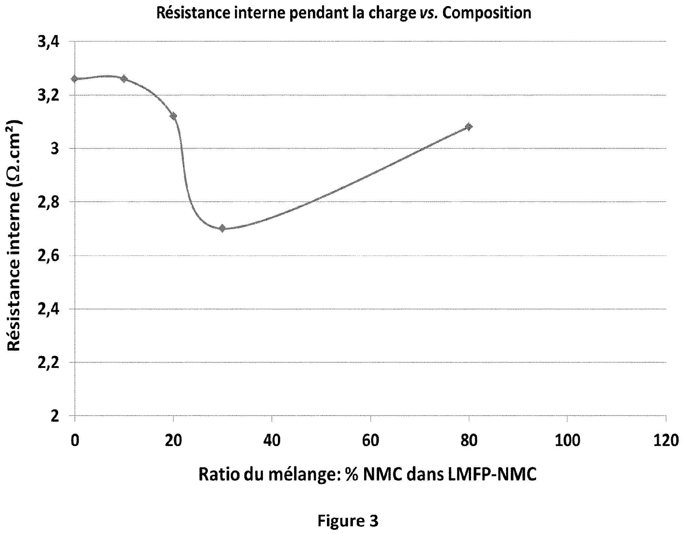

On a également constaté de manière surprenante que la résistance interne de la composition de matière active en masse de la composition ne variait pas de manière linéaire avec la quantité d'oxyde lithié. La figure 3 représente la variation de la résistance interne d'une composition de matière active comprenant de l'oxyde lithié dans des proportions croissantes. Elle montre que la résistance interne passe par un minimum lorsque la composition comprend de 20 à 70%, de préférence de 25 à 50 % en masse d'oxyde lithié. De préférence, l'oxyde lithié représente de 30 à 45% en masse de la composition. De préférence encore, l'oxyde lithié représente de 35 à 40% en masse de la composition.

Il va maintenant être décrit le procédé de dépôt de la composition de matière active sur un collecteur de courant. Le dépôt peut se faire par un procédé d'enduction. Dans ce procédé, on prépare une pâte en mélangeant la composition de matière active avec généralement un liant, un composé conducteur électronique et un solvant qui peut être organique ou aqueux. Dans le cas d'un solvant organique, ce peut être la N-methyl-2-pyrrolidone (NMP). La pâte est déposée sur un feuillard métallique servant de collecteur de courant. Le dépôt de la pâte peut se faire soit sur l'une des faces du collecteur de courant seulement, soit simultanément sur les deux faces du collecteur de courant. On obtient alors une électrode que l'on sèche pour évaporer le solvant. On peut ensuite comprimer l'électrode au cours d'une étape de calandrage. L'étape de calandrage permet d'ajuster l'épaisseur de la couche déposée. La couche déposée a une épaisseur après calandrage généralement comprise entre 25 μm et 300 μm. La quantité de pâte déposée sur le collecteur de courant varie généralement de 15 mg/cm$^2$ à 50 mg/cm$^2$, ce qui permet de réaliser un générateur convenant pour des applications nécessitant une forte énergie ou des applications nécessitant une forte puissance. Comme l'oxyde lithié et le phosphate lithié sont mélangés avant dépôt sur le collecteur de courant, l'invention exclut la situation dans laquelle l'oxyde lithié et le phosphate lithié seraient sous forme de deux couches distinctes superposées.

La composition de matière active représente généralement de 80 à 98% en poids du poids de la pâte.

Le liant et le composé conducteur électronique représentent chacun généralement de 1 à 10 % en poids du poids de la pâte.

Le collecteur de courant est de préférence un support conducteur bidimensionnel, comme un feuillard plein ou perforé, à base de carbone ou de métal, par exemple en nickel, acier, inox ou aluminium. Généralement, le collecteur de courant de l'électrode positive est en aluminium et son épaisseur est comprise entre 6 μm et 35 μm.

Le liant a pour fonction de renforcer la cohésion entre les particules de matière active ainsi que d'améliorer l'adhérence de la pâte au collecteur de courant. Le liant peut contenir un ou plusieurs des composants suivants : le polyfluorure de vinylidène (PVdF) et ses copolymères, le polytétrafluoroéthylène (PTFE), le polyacrylonitrile (PAN), le polyméthacrylate de méthyle ou de butyle, le polychlorure de vinyle (PVC), le polyvinylformal, les polyesters et les polyéthers blocs amides, les polymères de l'acide acrylique, l'acide méthacrylique, l'acrylamide, l'acide itaconique, l'acide sulfonique, les élastomères et les composés cellulosiques.

Parmi les élastomères utilisables, on peut citer les terpolymères éthylène / propylène / diène (EPDM), les copolymères styrène / butadiène (SBR), les copolymères acrylonitrile / butadiène (NBR), les copolymères bloc styrène / butadiène / styrène (SBS) ou styrène / acrylonitrile / styrène (SIS), les copolymères styrène / éthylène / butylène / styrène (SEBS), les terpolymères styrène / butadiène / vinylpyridine (SBVR), les polyuréthanes (PU), les néoprènes, les polyisobutylènes (PIB), les caoutchoucs butyle, et les mélanges de ceux-ci.

Le composé cellulosique peut être une carboxyméthylcellulose (CMC), une hydroxypropylméthylcellulose (HPMC), une hydroxypropylcellulose (HPC) ou une hydroxyéthylcellulose (HEC).

L'additif conducteur électronique est généralement choisi parmi du graphite, du noir de carbone, du noir d'acétylène, de la suie ou l'un de leurs mélanges.

La présente invention a encore pour objet un générateur électrochimique au lithium comprenant une électrode positive telle que décrite précédemment. Le générateur électrochimique selon l'invention comprend en outre au moins une électrode négative, au moins un électrolyte et au moins un séparateur et qui vont maintenant être décrits.

L'électrode négative est préparée de manière classique. La matière active peut être du lithium métallique ou un alliage à base de lithium métallique. Elle peut aussi être constituée d'un support conducteur servant de collecteur de courant qui est revêtu d'une couche contenant la matière active et comprenant en outre un liant et un matériau conducteur. La matière active est capable d'insérer du lithium dans sa structure. Elle peut être choisie parmi les composés de lithium, un matériau carboné susceptible d'insérer du lithium dans sa structure comme le graphite, le coke, le noir de carbone et le carbone vitreux. Elle peut aussi contenir de l'étain, du silicium, des composés à base de carbone et de silicium, des composés à base de carbone et d'étain et des composés à base de carbone, d'étain et de silicium et un oxyde de titane tel que $Li_4Ti_5O_{12}$. Elle peut comprendre du silicium dont la surface est greffée par un groupe organique tel que décrit dans le document EP-A-2 242 129. Elle peut comprendre un matériau nanocomposite SiC tel que décrit dans le document FR-A-2 885 734. Les anodes utilisées peuvent aussi être constituées d'oxydes, nitrures ou phosphure de métaux de transition.

Le collecteur de courant de l'électrode négative peut être en cuivre.

L'électrolyte est choisi parmi un électrolyte liquide non aqueux comportant un sel de lithium dissous dans un solvant et un électrolyte polymère solide conducteur ionique des ions lithium, comme par exemple l'oxyde de polyéthylène (PEO).

Le sel de lithium est choisi parmi le perchlorate de lithium $LiClO_4$, l'hexafluorophosphate de lithium $LiPF_6$, le tétrafluoroborate de lithium $LiBF_4$, le trifluorométhanesulfonate de lithium $LiCF_3SO_3$, le bis(fluorosulfonyl)imide de lithium $Li(FSO_2)_2N$ (LiFSI), le trifluorométhanesulfonimide de lithium $LiN(CF_3SO_2)_2$ (LiTFSI), le trifluorométhanesulfoneméthide de lithium $LiC(CF_3SO_2)_3$ (LiTFSM), le bisperfluoroéthylsulfonimide de lithium $LiN(C_2F_5SO_2)_2$ (LiBETI), le 4,5-dicyano-2-(trifluoromethyl) imidazolide de lithium (LiTDI), le bis(oxalatoborate) de lithium (LiBOB), le tris(pentafluoroethyl)trifluorophosphate de lithium $LiPF_3(CF_2CF_3)_3$ (LiFAP) et les mélanges des précédents.

De préférence, le solvant est un solvant ou un mélange de solvants choisi parmi les solvants organiques usuels notamment les carbonates cycliques saturés, les carbonates cycliques insaturés, les carbonates non cycliques, les esters d'alkyle, comme les formiates, les acétates, les propionates ou les butyrates, les éthers, les lactones comme la gamma-butyrolactone, le bioxyde de tétrahydrothiofène, les solvants nitriles, et les mélanges de ceux-ci. Parmi les carbonates cycliques saturés, on peut citer par exemple le carbonate d'éthylène (EC), le carbonate de fluoroéthylène (FEC), le carbonate de propylène (PC), le carbonate de butylène (BC), et les mélanges de ceux-ci. Parmi les carbonates cycliques insaturés, on peut citer par exemple le carbonate de vinylène (VC), ses dérivés et les mélanges de ceux-ci. Parmi les carbonates non cycliques, on peut citer par exemple le carbonate de diméthyle (DMC), le carbonate de diéthyle (DEC), le carbonate de méthyle éthyle (EMC), le carbonate de dipropyle (DPC) et les mélanges de ceux-ci. Parmi les esters d'alkyle, on peut citer par exemple l'acétate de méthyle, l'acétate d'éthyle, le propionate de méthyle, le propionate d'éthyle, le propionate de butyle, le butyrate de méthyle, le butyrate d'éthyle, le butyrate de propyle et les mélanges de ceux-ci. Parmi les éthers, on peut citer par exemple l'éther de diméthyle (DME) ou de diéthyle (DEE), et les mélanges de ceux-ci.

Le séparateur peut être constitué d'une couche de polypropylène (PP), de polyéthylène (PE), de polytétrafluoroéthylène (PTFE), de polyacrylonitrile (PAN), de polyéthylène-téréphtalate (PET) ou d'un mélange de couches de différentes natures. Les polymères cités peuvent être revêtus d'une couche de céramique.

EXEMPLES

Dans les exemples ci-dessous, l'électrode positive comprend un support collecteur de courant qui est un feuillard d'aluminium. On dépose sur celui-ci par enduction une couche constituée d'une pâte comprenant après évaporation du solvant:

- 89% en masse d'une composition de matière active selon l'invention. La formule chimique de l'oxyde lithié et du phosphate lithié entrant dans la composition de matière active, ainsi que leurs proportions respectives sont indiquées dans le Tableau 1 ci-après ;
- 6% en masse d'un mélange de noir de carbone et de graphite, servant d'agent conducteur électronique;
- 5% en masse de polyfluorure de vinylidène (PVDF) servant de liant.

L'électrode ainsi réalisée est alors calandrée.

L'électrode négative comprend du lithium métallique comme matière active.

Le séparateur utilisé comprend du polypropylène et du polyéthylène.

L'électrolyte est un sel de lithium dissous dans un solvant à base de carbonates d'alkyles.

Des générateurs électrochimiques ont été fabriqués. Ils diffèrent par la composition de la matière active utilisée dans l'électrode positive. Ces différentes électrodes sont néanmoins calandrées de manière identique. Les électrodes négatives, les séparateurs et l'électrolyte sont identiques. Ces générateurs électrochimiques ont subi un test de cyclage en durée de vie à 60°C. Le courant de décharge est de C/5, C étant la capacité nominale du générateur. La charge se fait à un courant de C/5 jusqu'à une tension de 4,4 V sans charge d'entretien (sans "floating"). Pour chaque générateur électrochimique fabriqué, les paramètres suivants ont été évalués qualitativement.

- Faisabilité de l'électrode, c'est-à-dire mesure de l'adhérence de la composition de matière active au collecteur de courant et mesure de la porosité de l'électrode
- Capacité initiale du générateur électrochimique
- Rétention de capacité après 50 cycles à 60°C.

La porosité de l'électrode est calculée après l'étape de calandrage par la différence entre le volume géométrique calculé à partir des dimensions de l'électrode et le volume théorique calculé à partir des densités des différents composants de l'électrode divisée par le volume théorique.

Les résultats sont rassemblés dans le Tableau 1 ci-dessous :

Tableau 1

| Ex. | ratio LFMP* / NMC** (%/%) | $Dv_{50}^{2}$ (LFMP) ($\mu$m) | $Dv_{50}^{1}$(NMC) ($\mu$m) | Composition du NMC | Composition du LFMP | Faisabilité de l'électrode | Capacité initiale | Rétention de capacité après 50 cycles à 60°C |
|---|---|---|---|---|---|---|---|---|
| 1*** | 100/0 | 18 | | | $LiFe_{0,33}Mn_{0,67}PO_4$ | - | + | ++ |
| 2 | 90/10 | 18 | 6 | $Li_{1,06}Ni_{0,5}Mn_{0,3}Co_{0,2}O_2$ | $LiFe_{0,33}Mn_{0,67}PO_4$ | + | + | ++ |
| 3 | 80/20 | 18 | 6 | $Li_{1,06}Ni_{0,5}Mn_{0,3}Co_{0,2}O_2$ | $LiFe_{0,33}Mn_{0,67}PO_4$ | + | + | ++ |
| 4 | 70/30 | 18 | 6 | $Li_{1,06}Ni_{0,5}Mn_{0,3}Co_{0,2}O_2$ | $LiFe_{0,33}Mn_{0,67}PO_4$ | ++ | ++ | ++ |
| 5 | 20/80 | 18 | 6 | $Li_{1,06}Ni_{0,5}Mn_{0,3}Co_{0,2}O_2$ | $LiFe_{0,33}Mn_{0,67}PO_4$ | ++ | ++ | + |
| 6*** | 0/100 | | 6 | $Li_{1,06}Ni_{0,5}Mn_{0,3}Co_{0,2}O_2$ | | ++ | ++ | - |
| 7*** | 70/30 | 0,2 | 6 | $Li_{1,06}Ni_{0,5}Mn_{0,3}Co_{0,2}O_2$ | $LiFe_{0,33}Mn_{0,67}PO_4$ | -- | | |
| 8*** | 70/30 | 0,2 | 6 | $Li_{1,06}Ni_{0,5}Mn_{0,3}Co_{0,2}O_2$ | $LiFe_{0,2}Mn_{0,8}PO_4$ | -- | | |
| 9 | 70/30 | 18 | 6 | $Li_{1,01}Ni_{0,6}Mn_{0,2}Co_{0,2}O_2$ | $LiFe_{0,33}Mn_{0,67}PO_4$ | ++ | ++ | ++ |

\* L'abréviation NMC désigne l'oxyde lithié de métaux de transition.

\*\* L'abréviation LFMP désigne le phosphate lithié de métaux de transition.

\*\*\* : Exemple ne faisant pas partie de l'invention

-- : très insuffisant

- : insuffisant

+ : satisfaisant

++ : très satisfaisant

EP 3 298 644 B1

Les exemples 7 et 8 hors invention montrent que l'utilisation d'une poudre de phosphate lithié dont le diamètre médian en volume $Dv_{50}^2$ des particules est de 0,2 $\mu$m ne permet pas d'obtenir une faisabilité satisfaisante : soit la matière active n'adhère pas au collecteur de courant après l'étape de calandrage, soit sa porosité est trop élevée.

Les exemples 2-6 et 9 montrent que lorsque les particules de phosphate lithié sont caractérisées par une valeur $Dv_{50}^2$ de 18 $\mu$m, on obtient une faisabilité satisfaisante de l'électrode (indiquée par les symboles "+" et "++").

L'électrode de l'exemple 6 hors invention présente une mauvaise rétention de capacité en raison de l'absence de phosphate lithié.

Parmi les compositions dans lesquelles les particules de phosphate lithié présentent un $Dv_{50}^2$ de 18 $\mu$m, on observe les résultats suivants :

- La composition de l'exemple 1 hors invention présente une porosité trop élevée (environ 52%), en raison de l'absence d'oxyde lithié.
- La faisabilité des électrodes des exemples 4, 5 et 9 est très satisfaisante (indiquée par le symbole "++"). La composition de matière active de ces électrodes contient entre 30% et 80% d'oxyde lithié. Dans ces exemples, la porosité est inférieure ou égale à environ 40%, ce qui est très satisfaisant. Les compositions des exemples 4 et 9 qui contiennent 30% de NMC permettent d'obtenir à la fois une faisabilité, une capacité initiale et une rétention de capacité satisfaisantes.
- Les électrodes des exemples 2 et 3 présentent une porosité plus élevée que celle des exemples 4 et 5, donc moins satisfaisante, en raison d'un pourcentage d'oxyde lithié plus faible (10%, 20% pour les exemples 2 et 3 au lieu de 30 et 80% pour les exemples 4 et 5).

## Revendications

1. Composition de matière active pour électrode positive d'un générateur électrochimique de type lithium-ion, comprenant:

    - un oxyde lithié de métaux de transition de formule $Li_{1+x}MO_2$ dans laquelle :
    $0 \leq x \leq 0,15$, M désigne $Ni_a Mn_b Co_c M'_d$ où a>0 ; b>0 ; c>0 ; d$\geq$0 et a+b+c+d=1; M' étant choisi dans le groupe consistant en B, Mg, Al, Si, Ca, Ti, V, Cr, Fe, Cu, Zn, Y, Zr, Nb, Mo ou un mélange de ceux-ci;
    - un phosphate lithié de métaux de transition de formule $LiMn_{1-y}M''_y PO_4$ où M'' représente au moins un élément choisi dans le groupe constitué par Fe, Ni, Co, Mg et Zn; et 0<y<0,5 ; l'oxyde lithié et le phosphate lithié étant sous la forme de particules ;

    la distribution de la taille des particules de l'oxyde lithié étant **caractérisée par** un premier diamètre médian en volume des particules $Dv_{50}^1 \geq 500$ nm;
    la distribution de la taille des particules du phosphate lithié étant **caractérisée par** un second diamètre médian en volume des particules $Dv_{50}^2 \geq 500$ nm;
    et $Dv_{50}^2 / Dv_{50}^1 \geq 1,5$.

2. Composition selon la revendication 1, dans laquelle le phosphate lithié de métaux de transition est revêtu d'une couche de carbone.

3. Composition selon la revendication 1 ou 2, dans laquelle la composition comprend

    - de 30 à 80% en masse d'oxyde lithié
    - de 70 à 20% en masse de phosphate lithié.

4. Composition selon la revendication 1 ou 2, dans laquelle la composition comprend:

    - de 20 à 50% en masse d'oxyde lithié
    - de 80 à 50% en masse de phosphate lithié.

5. Composition selon l'une des revendications précédentes, dans laquelle :

$$0,60 \geq a \geq 0,45 ; 0,35 \geq b \geq 0,25 ; 0,25 \geq c \geq 0,14.$$

**6.** Composition selon l'une des revendications précédentes, dans laquelle :

$$Dv_{50}{}^2 \geq 1\ \mu m\ et\ Dv_{50}{}^1 \geq 1\ \mu m.$$

**7.** Composition selon la revendication 6, dans laquelle $Dv_{50}{}^2 \geq 15\ \mu m$ et $Dv_{50}{}^1 \geq 5\ \mu m$.

**8.** Composition selon l'une des revendications précédentes dans laquelle $Dv_{50}{}^2/ Dv_{50}{}^1 \geq 2$, de préférence $Dv_{50}{}^2/Dv_{50}{}^1 \geq 3$.

**9.** Composition selon l'une des revendications précédentes, dans laquelle M" est Fe.

**10.** Composition selon l'une des revendications précédentes, dans laquelle a≤0,50.

**11.** Electrode comprenant la composition de matière active selon l'une des revendications précédentes.

**12.** Electrode selon la revendication précédente comprenant uniquement l'oxyde lithié de métaux de transition et le phosphate lithié de métaux de transition comme matières électrochimiquement actives.

**13.** Générateur électrochimique au lithium comprenant :

- au moins une électrode positive qui est une électrode selon l'une des revendications 11 et 12;
- au moins une électrode négative comprenant un matériau capable d'insérer et de désinsérer du lithium dans sa structure.


**Patentansprüche**

**1.** Zusammensetzung eines aktiven Materials für eine positive Elektrode einer galvanischen Zelle vom Lithium-Ion-Typ, umfassend:

• ein lithiiertes Oxid von Übergangsmetallen der Formel $Li_{1+x}MO_2$, wobei:

-

$$0 \leq x \leq 0,15,$$

- M für $Ni_aMn_bCo_cM'_d$ steht, wobei a > 0; b > 0; c > 0; d ≥ 0 und a + b + c + d = 1;
- M' aus der Gruppe bestehend aus B, Mg, Al, Si, Ca, Ti, V, Cr, Fe, Cu, Zn, Y, Zr, Nb, Mo oder einem Gemisch dieser ausgewählt ist;

• ein lithiiertes Phosphat von Übergangsmetallen der Formel $LiMn_{1-y}M''_yPO_4$, wobei

- M" mindestens ein Element darstellt, das aus der Gruppe bestehend aus Fe, Ni, Co, Mg und Zn ausgewählt ist; und 0 < y < 0,5; wobei das lithiierte Oxid und das lithiierte Phosphat in der Form von Teilchen sind;
- die Verteilung der Teilchengröße des lithiierten Oxids durch einen ersten mittleren Volumendurchmesser der Teilchen $Dv_{50}{}^1 \geq 500$ nm gekennzeichnet ist;
- die Verteilung der Teilchengröße des lithiierten Phosphats durch einen zweiten mittleren Volumendurchmesser der Teilchen $Dv_{50}{}^2 \geq 500$ nm gekennzeichnet ist; und wobei $Dv_{50}{}^2 / Dv_{50}{}^1 \geq 1,5$.

**2.** Zusammensetzung nach Anspruch 1, wobei das lithiierte Phosphat von Übergangsmetallen mit einer Kohlenstoffschicht beschichtet ist.

**3.** Zusammensetzung nach Anspruch 1 oder 2, wobei die Zusammensetzung umfasst:

- von 30 bis 80 Massen-% lithiiertes Oxid,

- von 70 bis 20 Massen-% lithiiertes Phosphat.

4.  Zusammensetzung nach Anspruch 1 oder 2, wobei die Zusammensetzung:

    - von 20 bis 50 Massen-% lithiiertes Oxid,
    - von 80 bis 50 Massen-% lithiiertes Phosphat umfasst.

5.  Zusammensetzung nach einem der vorhergehenden Ansprüche, wobei:

$$0{,}60 \geq a \geq 0{,}45; \quad 0{,}35 \geq b \geq 0{,}25; \quad 0{,}25 \geq c \geq 0{,}14.$$

6.  Zusammensetzung nach einem der vorhergehenden Ansprüche, wobei:

$$Dv_{50}^{2} \geq 1 \ \mu m \ und \ Dv_{50}^{1} \geq 1 \ \mu m.$$

7.  Zusammensetzung nach Anspruch 6, wobei

$$Dv_{50}^{2} \geq 15 \mu m \ und \ Dv_{50}^{1} \geq 5 \mu m.$$

8.  Zusammensetzung nach einem der vorhergehenden Ansprüche, wobei

$$Dv_{50}^{2} / Dv_{50}^{1} \geq 2, \ vorzugsweise \ Dv_{50}^{2} / Dv_{50}^{1} \geq 3.$$

9.  Zusammensetzung nach einem der vorhergehenden Ansprüche, wobei M" Fe ist.

10. Zusammensetzung nach einem der vorhergehenden Ansprüche, wobei

$$a \leq 0{,}50.$$

11. Elektrode, die die Zusammensetzung eines aktiven Materials nach einem der vorhergehenden Ansprüche umfasst.

12. Elektrode nach dem vorhergehenden Anspruch, die einzig das lithiierte Oxid von Übergangsmetallen und das lithiierte Phosphat von Übergangsmetallen als elektrochemisch aktive Materialien umfasst.

13. Galvanische Lithiumzelle, umfassend:

    - mindestens eine positive Elektrode, die eine Elektrode nach einem der Ansprüche 11 und 12 ist;
    - mindestens eine negative Elektrode, die ein Material umfasst, das Lithium in seine Struktur aufnehmen und aus dieser abgeben kann.


**Claims**

1.  Active material composition for a positive electrode of a lithium-ion secondary cell, comprising:

    - a lithiated transition metal oxide of formula $Li_{1+x}MO_2$ wherein:
    $0 \leq x \leq 0.15$, M denotes $Ni_aMn_bCo_cM'_d$ where a > 0; b > 0; c > 0; d $\geq$ 0; and a + b + c + d = 1; M' being selected from the group consisting of B, Mg, Al, Si, Ca, Ti, V, Cr, Fe, Cu, Zn, Y, Zr, Nb, Mo or a mixture thereof;
    - a lithiated transition metal phosphate of formula $LiMn_{1-y}M''_yPO_4$ where M" represents at least one element selected from the group consisting of Fe, Ni, Co, Mg and Zn; and 0 < y < 0.5; the lithiated oxide and the lithiated phosphate being in the form of particles;

the particle size distribution of the lithiated oxide being **characterized by** a first volume median diameter of the particles $Dv_{50}^1 \geq 500$ nm;
the particle size distribution of the lithiated phosphate being **characterized by** a second volume median diameter of the particles $Dv_{50}^2 \geq 500$ nm;
and $Dv_{50}^2 / Dv_{50}^1 \geq 1.5$.

2. Composition according to claim 1, wherein the lithiated transition metal phosphate is coated with a carbon layer.

3. Composition according to claim 1 or 2, wherein the composition comprises

   - from 30 to 80% by mass of lithiated oxide
   - from 70 to 20% by mass of lithiated phosphate.

4. Composition according to claim 1 or 2, wherein the composition comprises:

   - from 20 to 50% by mass of lithiated oxide
   - from 80 to 50% by mass of lithiated phosphate.

5. Composition according to one of the preceding claims, wherein:

$$0.60 \geq a \geq 0.45; \ 0.35 \geq b \geq 0.25; \ 0.25 \geq c \geq 0.14.$$

6. Composition according to one of the preceding claims, wherein:

$$Dv_{50}^2 \geq 1 \ \mu m \text{ and } Dv_{50}^1 \geq 1 \ \mu m.$$

7. Composition according to claim 6, wherein $Dv_{50}^2 \geq 15 \ \mu m$ and $Dv_{50}^1 \geq 5 \ \mu m$.

8. Composition according to one of the preceding claims wherein $Dv_{50}^2 / Dv_{50}^1 \geq 2$, preferably $Dv_{50}^2 / Dv_{50}^1 \geq 3$.

9. Composition according to one of the preceding claims, wherein M" is Fe.

10. Composition according to one of the preceding claims, wherein $a \leq 0.50$.

11. Electrode comprising the active material composition according to one of the preceding claims.

12. Electrode according to the preceding claim comprising only lithiated transition metal oxide and lithiated transition metal phosphate as electrochemically active materials.

13. Lithium secondary cell comprising:

   - at least one positive electrode which is an electrode according to one of claims 11 and 12;
   - at least one negative electrode comprising a material capable of insertion and deinsertion of lithium into/from its structure.

**Porosité de l'électrode *vs.* Composition**

**Figure 1**

Capacité spécifique initiale (C/20 jusqu'à 4.4 vs Li°, 60°C) *vs.* Composition

Figure 2

**Figure 3**

**EP 3 298 644 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130280610 A
- WO 2006071972 A
- US 20140138591 A
- US 20140045069 A
- WO 2014102071 A
- JP 2011113783 A
- EP 2242129 A
- FR 2885734 A